Europäisches Patentamt

(19) European Patent Office    (11) Publication number: **0 048 092**

Office européen des brevets    **B1**

(12) **EUROPEAN PATENT SPECIFICATION**

(45) Date of publication of patent specification: **31.10.84**    (51) Int. Cl.³: **F 16 K 31/385, F 16 K 7/07**

(21) Application number: **81303802.3**

(22) Date of filing: **20.08.81**

(54) Liquid pipeline surge reliever system.

(30) Priority: **15.09.80 US 186858**

(43) Date of publication of application:
**24.03.82 Bulletin 82/12**

(45) Publication of the grant of the patent:
**31.10.84 Bulletin 84/44**

(84) Designated Contracting States:
**DE FR GB IT NL**

(56) References cited:
**DE-A-2 142 394**
**DE-A-2 152 038**
**US-A-2 353 143**
**US-A-2 543 846**
**US-A-3 272 470**
**US-A-3 583 432**
**US-A-3 911 941**
**US-A-3 933 172**
**US-A-3 972 364**

(73) Proprietor: **GROVE VALVE AND REGULATOR
COMPANY**
**6529 Hollis Street**
**Oakland California 94608 (US)**

(72) Inventor: **Chow, Peter**
**35254 Lake Blvd.**
**Newark California 94560 (US)**
Inventor: **Ringer, William N.**
**167 Sylvia Dr.**
**Pleasant Hill California 94523 (US)**

(74) Representative: **Williams, Trevor John et al**
**J.A. KEMP & CO. 14 South Square Gray's Inn**
**London WC1R 5EU (GB)**

Courier Press, Leamington Spa, England.

## Description

This invention relates to a liquid pipeline surge reliever system comprising a diverter line for connection into a liquid pipeline, and a main surge relief valve in said diverter line.

Surge relief systems frequently employ large flexible tube type valves which are opened at a pipeline surge pressure level to dump a quantity of liquid into a reservoir until the surge is relieved. A valve of that type generally includes a flexible tube which is surrounded by a jacket containing a gas at the pipeline surge pressure. Rapid actuation is enabled by reason of the compressibility of the gas in the jacket, but such compression causes increased resistance to full expansion of the flexible tube out to the chamber wall, and therefore limits opening capacity of the relief valve during the surge, when it is most needed. Representative of the type of system just described are those shown in the US—A—3,911,941; US—A—3,972,364 and US—A—3,933,172.

The above mentioned US—A—3,911,941 describes a liquid pipeline surge reliever system in accordance with the prior art portion of Claim 1, comprising a diverter line for connection to a liquid pipeline; a main surge relief valve in said diverter line having a pressure gas control chamber further called "first control chamber", said main valve being conditioned to open to a reservoir when liquid on the up-stream side thereof reaches a pressure to overcome that in said first control chamber; a source of gas under pressure connected to said first control chamber; a control pressure bleed valve connected by one gas line to the first control chamber, the bleed valve being controllable in response to pressure sensed by a sensing line; an on-off valve in a supply gas line connecting the pressure gas source to the first control chamber for closing the gas supply to the first control chamber when the pressure bleed valve is open, the on-off valve being pressure actuated by increased pressure in the sensing line.

This prior construction has a direct pressure from the pipeline, via a pressure accumulator chamber, with the first control chamber with the result that the control gas pressure in the first control chamber will so vary that with an increased pressure in the pipeline the control pressure on the surge relief valve is also increased so as to increase the pressure at which the surge relief valve will open. In order to alleviate this problem this prior construction has a detecting system for detecting rate of pressure increase in the pipeline and responsive to an excessive rate of pressure increase to shut off the connection between the pipeline and the sensing pressure accumulator connected to the relief valve control chamber. The pipeline will then on further increase of pressure be relieved through the surge relief valve with that relief valve opening against the trapped pressure in the control chamber.

The present invention is characterized in that the control pressure bleed valve has a pressure gas control chamber, further called "second control chamber", which is smaller than said first control chamber; in that the bleed valve is conditioned to open when pressure on the upstream side thereof exceeds that in said second control chamber; in that another gas line connects the first control chamber to the second control chamber; in that a pilot valve is provided conditioned to open when pressure being sensed therein exceeds a predetermined set pipeline pressure, said second control chamber being connected to the pilot valve to be exhausted therethrough and the sensing line conducting pipeline fluid pressure to said pilot valve whereby when pressure therein reaches said set pressure the pilot valve opens to exhaust said second control chamber enabling gas from said first control chamber to escape through said bleed valve.

With this construction there is no need to provide a rate of pressure increase detector but instead control is provided very much more simply and economically by sensing the actual pressure in the pipeline. Additionally, with the structure of the present invention the pressure in the surge control chamber has a predetermined maximum set at the gas source so that if the pressure in the pipeline exceeds that predetermined maximum the surge relief valve will open. However, in order to ensure rapid and complete relief of the surge the present invention provides for the pressure in the first control chamber actually to be relieved, should the pipeline pressure surge a sufficiently high level, so as to ensure the complete full opening of the relief valve to provide a complete and efficient surge dumping relief with initial relief of the main pipeline occurring at a predetermined pressure dependent upon the set pressure of gas supplied from the gas source.

In US—A—2,543,846 there is shown a pressure relief valve which is not controlled by gas pressure as with the present invention but is controlled by pressure fluid obtained from the upstream side of the valve. Pressure relief is obtained through actuation of a control piston and diaphragm against the action of a spring to operate a rotary valve to allow bleeding of the relief valve. This arrangement is generally more cumbersome than the arrangement of the present invention and suffers from the defect that if there is any malfunction of the control diaphragm or valving it is impossible for the relief valve to open however high the pressure rises whereas with the present invention the opening of the main relief valve is against a compressible gas pressure such that relief will be obtained once the pipeline pressure rises to a predetermined level regardless of whether the additional feature of relieving the control gas pressure is utilized for surge dumping. Thus while this prior construction simply provides, when working properly, for rapid full opening of a relief valve and subsequent slow closing thereof the present invention provides for the valve to be initially openable upon a predetermined pressure arising in the pipeline with full opening and dumping of pipeline pressure occurring when the pressure has reached a level such as to cause the control gas pressure in the main relief valve control chamber to be dumped. A further advantage of the present invention is that the only material to be dumped is control gas which can be released safely through the atmosphere whereas with this prior art construction it is the liquid to be relieved which is dumped from a control valving as well as being released through the relief valve giving possible collection problems if the liquid in the pipeline is toxic or otherwise such that it needs to be kept confined.

In a preferred system, a large capacity relief valve of the flexible tube type is connected into the branch or diverter line from the main pipeline. The control chamber or jacket of the main relief valve is charged by gas from a suitable source at a set pipeline surge level so that the main valve will open when, but only when, that level is exceeded, to dump a quantity of liquid into a reservoir until the surge subsides. In the case of a large surge which taxes the capacity of the main relief valve, the pilot valve opens to evacuate the control jacket of a bleed valve, which preferably is also of the flexible tube type. The pilot valve is set to open for a short time to relieve just the crest of a surge and then to close to allow the main relief valve to continue to relieve against the jacket pressure. In the meantime, a normally open, pressure-actuated, on-off valve in the gas supply line is closed during the time the pilot valve is open so that bleeding does not continue. In operation, the pilot valve, when opened, exhausts the relatively small control jacket of the bleed valve, allowing it to bleed off some of the control gas in the main valve jacket, which may then open to increased capacity flow.

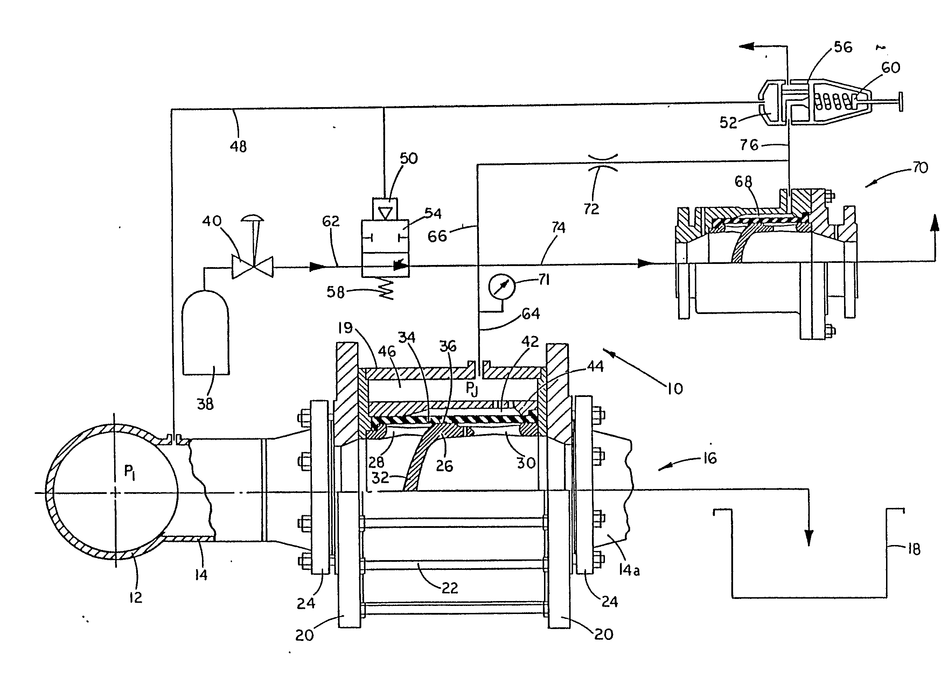

The invention will be further described, by way of example, with reference to the accompanying drawing the single figure of which is a schematic diagram of a surge reliever system embodying the invention with main valve and evacuation valve shown partly in section.

The drawing shows a surge relief system 10 adapted for operation in conjunction with a liquid transporting pipeline 12, and it is installed in a diverting or surge relief line 14 in open communication therewith. Surges frequently occur when the flowing liquid is subjected to sudden changes in flow conditions, as when a pump (not shown) is activated or deactivated. When such a surge exceeds a predetermined design pressure level for safe pipeline operation, the system 10 is operational to relieve the surge by diverting a quantity of liquid from the pipeline 12, through the diverting line 14 and a surge relief valve 16, to a reservoir 18.

The reliever valve 16 may be of the expansible tube type, such as that shown in US—A—3,272,470. Specifically, the surge relief valve 16 is illustrated as comprising a cylindrical body shell 19 which is clamped between two closure plates 20, as by means of studs 22. The closure plates 20 are, in turn, secured by conventional means to complementary flanges 24 in the diverting line with the outlet line 14a directed to the reservoir 18.

A slotted core 26 is carried within the valve body 19 and includes spaced, circumferential rows of inlet and outlet slots 28 and 30 on opposite sides of an intermediate barrier 32. A flexible, expansible tube 34 is stretched over the cylindrical sealing surface 36 of the barrier, normally to prevent flow from the inlet slots 28 to the outlet slots 30. A gas, such as nitrogen from a suitable source 38, is regulated by a regulator 40 to a predetermined pressure $P_j$ to be maintained in the jacket 42 surrounding the expansible tube 34. The jacket pressure $P_j$ is well above normal pipeline pressure, but within the safe design limits of the pipeline, and will enable the valve 16 to open and relieve a surge when that pressure is exceeded. A restraining sleeve 44 with perforations therein limits the expansion of the rubber tube 34, while the spacious chamber 46 around the perforated sleeve provides volume for compression of the control gas.

A sensing line 48, which opens into the diverting conduit 14, directs pipeline pressure P1 into sensing chambers 50 and 52 of a pressure actuated on-off valve 54 and gas pilot valve 56 respectively. The pressure responsive on-off valve 54 is normally open and is set by suitable spring means 58 to close in anticipation of the opening of pilot valve 56 when the pressure in line 48 reaches a predetermined dangerous or risk surge level which demands pipeline relief. The pilot valve 56 is set by suitable spring adjustment means 60 to open when that predetermined surge level is reached, for a purpose hereinafter to be described.

The pressure actuated on-off valve 54 is mounted in a gas supply line 62 from the source 38. The gas supply line 62 is then connected to a first branch 64 for loading the jacket 42 of the surge relief valve 16 and a second branch line 66 for loading the jacket 68 of a smaller expansible tube valve 70 through which the jacket 42 may be evacuated rapidly, as will be described. The jacket pressures at 42 and 68 may be monitored at 71. An orifice 72 is provided in the second branch line 66 and evacuation line 74 connects with the branch line 64 to enable the main relief valve jacket to be evacuated. The jacket of the bleed valve 70 is evacuated through the line 76 and the pilot valve 56.

The operation of the system will now be described. In normal operation, with pipeline pressures P1 within the safe range of operation, the main surge relief valve jacket 42 remains fully loaded through the normally-open pressure actuated valve 54. The jacket 68 of the bleed valve 70 is also loaded to maintain that valve closed, evacuation being prevented by the normally-closed pilot 56.

In the event of a surge, the main surge relief valve 16 starts to open slowly as the surge pressure in the diverter conduit commences to overcome the jacket pressure $P_j$. If the surge reaches a predetermined set point, the normally-open pressure actuated valve 54 is closed to prevent further flow through supply line 62. Then, at a slightly higher pressure, the pilot valve 56 is opened to commence evacuation of the jacket 68 of the bleed valve 70. This conditions the smaller bleed valve 70 to evacuate the main valve jacket 42, enabling further expansion of the tube 34 for greater flow through the slots 28 and 30 and out the outlet 14a to the reservoir 18.

When the surge pressure starts to subside and the line pressure P1 reaches the set pressure of the pilot valve 56 it closes to prevent further evacuation of the bleed valve jacket 68 while the main surge relief valve continues to relieve line fluid to the reservoir 18. At a slightly lower pressure or risk pressure level the on-off valve 54 is opened so that pressures in the two jackets 42 and 68 start to build up while the main valve 16 continues to relieve the surge.

Hence, the pilot valve 56 remains open only long enough to enable the main surge relief valve 56 to return pipeline pressure to the set point of the pilot valve 56, which set point is above the surge-relieving level. Its function is to condition the bleed valve to evacuate the main valve jacket for just that normally brief period necessary to increase the capacity of the main valve 16 to relieve the crest of the surge below the danger level, and then to allow the main valve 16 to continue to relieve by compressing the gas confined in the jacket 42, 46. This brief, peak load function of the pilot valve 56, coupled with the shutting off of the gas supply by the on-off valve, minimizes bleeding of gas and facilitates recharging the system.

**Claims**

1. A liquid pipeline surge reliever system comprising a diverter line (14) for connection into a liquid pipeline (12); a main surge relief valve (16) in said diverter line having a pressure gas control chamber, further called "first control chamber" (46), said main valve (16) being conditioned to open to a reservoir (18) when liquid on the up-stream side thereof reaches pressure to overcome that in said first control chamber (46); a source (38) of gas under pressure connected to said first control chamber (46); a control pressure bleed valve (70) connected by one gas line (64, 74) to the first control chamber (46), the bleed valve (70) being controllable in response to pressure sensed by a sensing line (48); an on-off valve (54) in a supply gas line (62) connecting the pressure gas source (38) to the first control chamber (46) for closing the gas supply to the first control chamber when the pressure bleed valve (70) is open, the on-off valve (54) being pressure actuated by increased pressure in the sensing the line (48), characterized in that

— the control pressure bleed valve (70) has a pressure gas control chamber, further called "second control chamber" (68) which is smaller than said first control chamber (46);

— in that the bleed value (70) is conditioned to open when pressure on the upstream side thereof exceeds that in said second control chamber (68);

— in that another gas line (64, 66) connects the first control chamber (46) to the second control chamber (68);

— in that a pilot valve (56) is provided conditioned to open when pressure being sensed therein exceeds a predetermined set pipeline pressure, said second control chamber being connected to the pilot valve (56) to be exhausted therethrough and the sensing line (48) conducting pipeline fluid pressure to said pilot valve (56) whereby when pressure therein reaches said set pressure the pilot valve (56) opens to exhaust said second control chamber (68) enabling gas from said first control chamber (46) to escape through said bleed valve (70).

2. A pipeline surge reliever system according to claim 1, characterized in that an orifice (72) is provided in said other gas line (66) to retard flow therethrough while said second control chamber (68) is being exhausted.

3. A pipeline surge reliever system according to claim 2, characterized in that said gas supply line (62) is connected to said one gas line (64, 74), said other gas line (66) and said first control chamber (46).

4. A pipeline surge reliever system according to any preceding claim, characterized in that the pressure of gas in said first control chamber (46) is at a level to be overcome by a fluid pressure in said diverter line or a first surge pressure level; and said on-off valve (54) is set to close when pressure in said diverter line (14) reaches a higher risk pressure level.

5. A pipeline surge reliever system according to claim 4, characterized in that said pilot valve (56) is set to open when pressure in said diverter line (14) reaches a level slightly above said higher risk pressure level.

6. A pipeline surge reliever system according to any preceding claim, characterized in that both said main surge relief valve (16) and the bleed valve (70) are expansible tube valves including a circular barrier extending across a flow passageway; an expansible tube stretched around said barrier; and a jacket space around said tube forming said first and second control chambers, respectively, the bleed valve (70) being smaller than the surge relief valve.

7. A pipeline surge reliever system according to any preceding claim, characterized in that the outlets of said pilot valve (56) and said control pressure bleed valve (70) open to the atmosphere.

8. A pipeline surge reliever system according to claim 1, characterized in that the main surge relief valve (16) includes a circular barrier (32) extending across a flow passage, an expansible tube (34) stretched around said barrier, and a jacket space (48) around said tube forming the first pressure gas control chamber which is of adequate volume to enable expansion of said tube without substantial increase in jacket pressure; in that the pressure of gas in said first control chamber (46) is at a level to be overcome by a surge pressure in said diverter line (14) at a first pressure level; and in that said pilot valve (56) is set to open when pressure in said diverter line reaches a greater pressure level so that said main surge relief valve (16) can open without bleeding said second control chamber (68) unless said greater pressure level is reached.

**Revendications**

1. Système pour décharger des ondes de pression pour un pipeline traversé par un liquide, comprenant une canalisation de dérivation (14) desinée à se raccorder à un pipeline à liquide (12); une soupape de détente principale (16), dans ladite canalisation de dérivation, comportant une chambre de commande de gaz sous pression, également appelée "première chambre de commande" (46), ladite soupape principale (16) étant conçue pour s'ouvrir sur un réservoir (18) lorsque le liquide qui se trouve sur son côté amont atteint une pression qui lui permet de vaincre celle qui règne dans ladite première chambre de commande (46); une source (38) de gaz sous pression, reliée à ladite première chambre de commande (46); une soupape de purge (70) de pression de commande, reliée par une canalisation de gaz (64, 74) à la première chambre de commande (46), la soupape de purge (70) pouvant être commandée en réponse à la pression détectée par une canlisation de détection (48); une soupape tout ou rien (54), dans une calisation (62) de gaz d'alimentation, reliant la source de gaz sous pression (38) à la première chambre de commande (46) pour couper l'alimentation en gaz de la première chambre de commande lorsque la soupape de purge de pression (70) est ouverte, la soupape tout ou rien (54) étant actionnée par pression lors d'une augmentation de pression dans la canalisation de détection (48), caractérisé en ce que:

— la soupape de purge de pression de commande (70) comporte une chambre de commande de gaz sous pression, également appelée "seconde chambre de comande" (68), qui est plus petite que ladite première chambre de commande (46);

— en ce que la soupape de purge (70) est conçue pour s'ouvrir lorsque la pression qui s'exerce sur son côté amont dépasse celle qui règne dans ladite seconde chambre de commande (68);

— en ce qu'une autre canalisation de gaz (64, 66) relie la première chambre de commande (46) à la seconde chambre de commande (68);

— en ce qu'il est prévu une soupape pilote (56) qui est conçue pour s'ouvrir lorsque la pression qui y est détectée dépasse une pression de repère prédéterminée dans le pipeline, ladite seconde chambre de commande étant reliée à la soupape pilote (56) de façon à être évacuée par son intermédiaire, et la canalisation de détection (48) acheminant le liquide sous pression du pipeline jusqu'à ladite soupape pilote (56) de telle sorte que, lorsque la pression qui y règne atteint ladite pression de repère, la soupape pilote (56) s'ouvre pour évacuer ladite seconde chambre de commande (68), en permettant au gaz qui arrive de ladite première chambre de commande (46) de s'échapper par ladite soupape de purge (70).

2. Système pour décharger les ondes de pression pour un pipeline selon la revendication 1, caractérisé en ce qu'un orifice (72) est ménagé dans ladite autre canalisation de gaz (66) pour y ralentir le débit du liquide pendant que ladite seconde chambre de commande (68) est évacuée.

3. Système pour décharger des ondes de pression pour un pipeline selon la revendication 2, caractérisé en ce que ladite canalisation d'alimentation en gaz (62) est reliée à ladite canalisation de gaz (64, 74), à ladite autre canalisation de gaz (66) et à ladite première chambre de commande (46).

4. Système pour décharger des ondes de pression pour un pipeline selon l'une quelconque des revendications précédentes, caractérisé en ce que la pression de gaz que règne dans ladite première chambre de commande (46) se situe à un niveau destiné à être surmonté par une pression de liquide dans ladite canalisation de dérivation, ou à un premier niveau de surpression; et en ce que ladite soupape tout ou rien (54) est réglée de façon à se fermer lorsque la pression qui règne dans ladite canalisation de dérivation (14) atteint un niveau de pression de risque plus élevé.

5. Système pour décharger des ondes de pression pour un pipeline selon la revendication 4, caractérisé en ce que ladite soupape pilote (56) est réglée de façon à s'ouvrir lorsque la pression qui règne dans ladite canalisation de dérivation (14) atteint un niveau légèrement supérieur audit niveau de pression de risque plus élevé.

6. Système pour décharger des ondes de pression pour un pipeline selon l'une quelconque des revendications précédentes, caractérisé en ce que ladite soupape de détente principale (16) et la soupape de purge (70) sont toutes deux des soupapes à tube dilatable comportant un écran circulaire placé en travers d'une passage d'écoulement; un tube dilatable tendu autour dudit écran; et un espace de chemisage autour dudit tube formant respectivement ladite première et ladite seconde chambres de commande, la soupape de purge (70) étant plus petite que la soupape de détente.

7. Système pour décharger des ondes de pression pour un pipeline selon l'une quelconque des revendications précédentes, caractérisé en ce que les sorties de ladite soupape pilote (56) et de ladite soupape de purge (70) de pression de commande débouchent dans l'atmosphère.

8. Système pour décharger des ondes de pression pour un pipeline selon la revendication 1, caractérisé en ce que la soupape de détente principale (16) comporte un écran circulaire (32) placé en travers d'un passage d'écoulement, un taube dilatable (34) tendu autor dudit écran, et un espace de chemisage (42) autour dudit tube, formant la première chambre de commande de gaz sous pression qui a un volume suffisant pour permettre la dilatation dudit tube sans augmentation importante de la pression qui règne dans la chemise; en ce que la pression de gaz qui règne dans ladite première chambre de commande (46) se situe à un niveau destiné à être surmonté par une surpression dans ladite canalisation de dérivation (14) à un premier niveau de pression; et en ce que ladite soupape pilote (56) est réglée de façon à s'ouvrir lorsque la pression qui règne dans ladite canalisation de dérivation atteint un niveau de pression plus élevé, si bien que ladite soupape de détente principale (16) peut s'ouvrir sans purger ladite seconde chambre de commande (68) à moins que ledit niveau de pression plus élevé soit atteint.

**Patentansprüche**

1. System zur Druckwellenentlastung für eine flüssigkeitsdurchströmte Rohrleitung, mit einer Abzweigleitung (14) zum Anschluß an eine flüssigkeitsdurchströmte Rohrleitung (12), einem Hauptdruckwellenentlastungsventil (16) in der Abzweigleitung, das eine nachfolgend als "erste Steuerkammer" bezeichnete Druckgassteuerkammer (46) aufweist, wobei das Hauptdruckwellenentlastungsventil (16) zwangsweise zu einem Reservoir (18) geöffnet wird, wenn die Flüssigkeit auf seiner stromaufwärtigen Seite einen Druck erreicht, der den Druck in der ersten Steuerkammer (46) übersteigt, einer Quelle (38) für unter Druck stehendem Gas, die mit der ersten Steuerkammer (46) verbunden ist, einem Steuerdruckauslaßventil (70), das durch eine Gasleitung (64, 74) mit der ersten Steuerkammer (46) verbunden ist, wobei das Auslaßventil (70) in Abhängigkeit vom mittels einer Abtastleitung (48) abgetasteten Druck steuerbar ist, und mit einem Ein-Aus-Ventil (54) in einer Gasspeiseleitung (62), welche die Druckgasquelle (38) mit der ersten Steuerkammer (46) zur Unterbrechung der Gaszufuhr zur ersten Steuerkammer, wenn das Druckauslaßventil (70) offen ist, verbindet, wobei das Ein-Aus-Ventil (54) durch den erhöhten Druck in der Abtastleitung (48) druckbetätigt ist, dadurch gekennzeichnet, daß das Steuerdruckauslaßventil (70) eine nachfolgend als "zweite Steuerkammer (68)" bezeichnete Druckgassteuerkammer aufweist, die kleiner ist als die erste Steuerkammer (46), daß das Auslaßventil (70) geöffnet wird, wenn der Druck auf seiner stromaufwärtigen Seite den Druck in der zweiten Steuerkammer (68) übersteigt, daß eine zusätzliche Gasleitung (64, 66) die erste Steuerkammer (46) mit der zweiten Steuerkammer (68) verbindet, daß ein Steuerventil (56) vorgesehen ist, das geöffnet wird, wenn der in ihr abgetastete Druck einen vorher eingestellten Rohrleitungsdruck übersteigt, wobei die zweite Steuerkammer (68) zu ihrer Entleerung mit dem Steuerventil (56) verbunden ist und die Abtastleitung (48) den Flüssigkeitsdruck der Rohrleitung in das Steuerventil (56) einleitet, wodurch das Steuerventil (56) zum Entleeren der zweiten Steuerkammer (68) geöffnet wird, wenn der Druck in ihm den eingestellten Druck erreicht, so daß Gas von der ersten Steuerkammer (46) durch das Auslaßventil (70) entweichen kann.

2. System zur Druckwellenentlastung nach Anspruch 1, dadurch gekennzeichnet, daß in der zusätzlichen Gasleitung (66) zur Verzögerung des Durchflusses während der Entleerung der zweiten Steuerkammer eine Blende (72) vorgesehen ist.

3. System zur Druckwellenentlastung nach Anspruch 2, dadurch gekennzeichnet, daß die Gasspeiseleitung (62) mit der einen Gasleitung (64, 74), mit der Zusätzlichen Gasleitung (66) und mit der ersten Steuerkammer (46) verbunden ist.

4. System zur Druckwellenentlastung nach einem der vorhergehenden Ansprüche, dadurch gekennzeichnet, daß der Gasdruck in der ersten Steuerkammer (46) such auf einem Niveau befindet, das durch einen Flüssigkeitsdruck in der Abzweigleitung oder durch ein erstes Druckniveau einer Druckwelle überstiegen wird, und das Ein-Aus-Ventil (54) geschlossen wird, wenn der Druck in der Abzweigleitung (14) ein gefährlicheres Druckniveau erreicht.

5. System zur Druckwellenentlastung nach Anspruch 4, dadurch gekennzeichnet, daß das Steuerventil (56) geöffnet wird, wenn der Druck in der Abzweigleitung (14) ein Niveau erreicht, das Geringfügig über dem gefährlichen Druckniveau liegt.

6. System zur Druckwellenentlastung nach einem der vorhergehenden Ansprüche, dadurch gekennzeichnet, daß das Hauptdruckwellenentlastungsventil (16) und das Auslaßventil (60) dehnbare Rohrventile sind, welche zur Ausbildung der ersten bzw. zweiten Steuerkammer eine sich über einen Strömungspfad erstreckende, kreisförmige Trennwand, ein um die Trennwand gespanntes, dehnbares Rohr und eine vom Rohr beabstandete Hülle enthalten, wobei das Auslaßventil (70) kleiner ist als das Druckwellenentlastungsventil.

7. System zur Druckwellenentlastung nach einem der vorhergehenden Ansprüche, dadurch gekennzeichnet, daß der Auslaß des Steuerventiles (56) und der Auslaß des Steuerdruckauslaßventiles (70) zur atmosphärischen Umgebung geöffnet sind.

8. System zur Druckwellenentlastung nach Anspruch 1, dadurch gekennzeichnet, daß das Hauptdruckwellenentlastungsventil (16) eine sich über den Strömungspfad erstreckende, kreisförmige Trennwand (32), ein um die Trennwand gespanntes dehnbares Rohr (34) und eine vom Rohr beabstandete Hülle (42) enthält, welche die erste Druckgas-Steuerkammer bildet, die ein zur Ausdehnung des Rohres ohne wesentliche Zunahme des Hüllendruckes ausreichendes Volumen aufweist, daß der Gasdruck in der ersten Steuerkammer (46) sich auf einem Niveau befindet, das durch ein erstes Druckniveau einer Druckwelle in der Abzweigleitung (14) überstiegen wird, und daß das Steuerventil (56) geöffnet wird, wenn der Druck in der Abzweigleitung ein höheres Niveau erreicht, so daß das Druckwellenentlastungsventil (16) öffnen kann, ohne die zweite Steuerkammer (68) zu entleeren, bis das höhere Druckniveau erreicht ist.

0048092